# EUROPEAN PATENT SPECIFICATION

(11) **EP 1 662 707 B1**
(45) Date of publication and mention of the grant of the patent: **30.10.2019**
(21) Application number: 04770854.0
(22) Date of filing: 21.07.2004
(51) Int. Cl.: A63F 13/23, A63F 13/235

(54) **COMMUNICATION DEVICE, GAME SYSTEM, CONNECTION ESTABLISHMENT METHOD, COMMUNICATION METHOD, ADAPTER DEVICE, AND COMMUNICATION SYSTEM**
KOMMUNIKATIONSEINRICHTUNG, SPIELSYSTEM, VERBINDUNGSHERSTELLVERFAHREN, KOMMUNIKATIONSVERFAHREN, ADAPTEREINRICHTUNG UND KOMMUNIKATIONSSYSTEM
DISPOSITIF DE COMMUNICATION, SYSTEME DE JEU, PROCEDE D'ETABLISSEMENT DE LIAISON, PROCEDE DE COMMUNICATION, DISPOSITIF D'ADAPTATION ET SYSTEME DE COMMUNICATION

(30) Priority: 23.07.2003 JP 2003200231; 28.11.2003 JP 2003400339
(43) Date of publication of application: 31.05.2006
(73) Proprietor: Sony Interactive Entertainment Inc., Tokyo 108-0075 (JP)
(72) Inventor: MIYAZAKI, Yoshio, Sony Computer Entertainment Inc., Tokyo 107-0062 (JP)
(74) Representative: Müller Hoffmann & Partner
(86) International application number: PCT/JP2004/010344
(87) International publication number: WO 2005/008966

(56) References cited:
- WO-A2-02/34345
- JP-A- 8 294 581
- JP-A- 2001 222 360
- JP-A- 2002 084 294
- JP-A- 2002 202 843
- JP-A- 2002 319 945
- JP-A- 2003 032 264
- JP-A- 2003 174 456
- US-A1- 2002 072 410
- US-A1- 2003 003 993
- US-B1- 6 324 603

## Description

### TECHNICAL FIELD

The present invention relates to communications technologies, and more particularly to a technology for implementing wireless communications between a master and a slave.

### BACKGROUND TECHNOLOGY

A game device and a game device controller operated by a user were typically connected to each other by a cable. However, such a system has been recently suggested which provides a wireless connection between a game device and a controller. The employment of the wireless controller has made it possible for the user to take any posture while playing a game.

US 2002/072410 A1 discloses the use of correlation information expressing the correlation between a plurality of operation terminal devices and information operable therethrough is generated, and such correlation information is output to the operation terminal devices. This allows the operators of the operation terminal devices to readily recognize the correlation between the operation terminal devices and information operable therethrough among information handled on an information processing devices.

WO 02/34345 A2 discloses a radio frequency wireless system for managing electronic gaming system components. The system comprises a base transceiver engaged with the game device, a controller for transmitting RF wireless signals to the base transceiver, and a microprocessor engaged with the base transceiver for controlling the receipt and transmission of said RF wireless signals.

### DISCLOSURE OF THE INVENTION

In wireless game systems which have been already suggested, it is assumed that the wireless communication device and the wireless controller of a game device set up a point-to-point wireless connection therebetween, such that the connected parties are uniquely determined. To allow a plurality of users to use wireless controllers, a dedicated wireless communication device assigned to the respective wireless controllers need to be installed in a slot of the game device for each wireless controller. To this end, the users always have to prepare a set of the wireless controller and the communication device to be installed in the game device, resulting in the wireless controller being used at much expense in time. In this context, it is conceivably preferable that a game device be provided with a transceiver that is capable of wirelessly connecting to a plurality of wireless controllers. In this case, to prevent the continuity of a game from being impaired, it is necessary to take latencies or delay times in transferring data into account.

The present invention was developed in view of these circumstances. It is therefore an object of the present invention to provide a communications technology which efficiently realizes the establishment of a wireless connection between a master and one or more slaves. It is another object of the invention to provide a technology which can efficiently establish a wireless connection between an electronic device, such as a game device that is originally intended to connect to a controller by a cable, and an external communication terminal.

An aspect of the present invention is to provide a communication device which includes a plurality of masters each capable of wirelessly connecting to a plurality of slaves, and a control unit which controls a transmission of information relating to a slave between the plurality of masters. The communication device may be a game device having a wireless communication capability, in the case of which the game device may correspond to a master while the game device wireless controller corresponds to a slave. The communication device may also be a device other than a game device, for example, a control device which controls terminal devices such as of home appliances in a home network.

Another aspect of the present invention is to provide a communication device which includes a mount portion in which a master capable of wirelessly connecting to a plurality of slaves is mounted, and a control unit which controls a transmission of information relating to a slave between a plurality of masters, with the master mounted in the mount portion. The communication device may be a game device which is capable of controlling wireless communications. In this case, the game device may incorporate a master capable of wirelessly connecting to a plurality of slaves, and the control unit may control a transmission of information relating to a slave between the internal master and an external master that is provided externally. When no master is incorporated in the game device, a plurality of masters may be externally supplied to the game device, and the control unit may control a transmission of information relating to a slave between the plurality of external masters.

Another aspect of the present invention is to provide a game system which includes a plurality of game device wireless controllers, a plurality of communication modules each capable of wirelessly connecting to a plurality of wireless controllers, and a control unit which controls a transmission of information relating to the wireless controller between the plurality of communication modules.

Another aspect of the present invention is to provide a method for establishing a connection to a plurality of slaves in a communication device having a first master and a second master. The method includes: allowing the first master to perform an inquiry procedure for establishing a connection; allowing the first master to acquire information relating to the plurality of slaves; transferring information relating to a slave to the second master; allowing the first master to page a slave; and allowing the second master to page a slave that is not paged by the first master.

Another aspect of the present invention is to provide a method for performing communications between a master and a slave using a plurality of masters having an overlapped coverage. In the method, based on information relating to a plurality of slaves acquired by one master, the plurality of slaves are divided between each master to establish a connection for communications between the master and the slave.

Another aspect of the present invention is to provide a wireless adapter device which connects to a plurality of connection terminals provided in an electronic device to relay a signal transmission between the electronic device and a wireless communication terminal. The wireless adapter device includes a control unit which selects one of connection ports assigned respectively to the plurality of connection terminals to set the resulting connection port to the wireless communication terminal. The connection port is a logically assigned interface, and during communications, the control unit uses a port number setting to distinguish one from other wireless communication terminals.

Another aspect of the present invention is to provide a wireless adapter device which connects to a plurality of slots, provided in a game device, for a wired controller to relay signal transmissions between the game device and the wireless controller. The wireless adapter device according to this aspect includes a plurality of connections provided corresponding to the plurality of slots of the game device; a wireless communication unit which transmits and receives a signal to and from the wireless controller; and a control unit which selects one of connection ports assigned respectively to the plurality of slots to set the resulting connection port to the wireless controller. The connection port is a logically assigned interface, and during communications, the control unit uses a port number setting to distinguish one from other wireless controllers. At the start of a game, a user's ordinal position as a player is determined with a port number, thereby allowing the user to select a character based on the player number identified by the port number. During the game, the game device reflects game manipulations on the wireless controller onto the motion of the character or the like, based on the port number of the wireless controller.

Another aspect of the present invention is to provide a communication system which includes: an electronic device having a plurality of connection terminals; a wireless communication terminal; and a wireless adapter device which relays a signal transmission between the electronic device and the wireless communication terminal. In this communication system, the wireless adapter device includes a control unit which is connected to the plurality of connection terminals of the electronic device, and selects one of connection ports assigned respectively to the plurality of connection terminals to set the resulting connection port to the wireless communication terminal.

Another aspect of the present invention is to provide an adapter device which connects to a plurality of connection terminals provided in an electronic device to relay a signal transmission between the electronic device and a communication terminal. In an Ethernet (trademark) wired communication environment or a Bluetooth wireless communication environment, this adapter device includes a control unit which selects one of connection ports assigned respectively to the plurality of connection terminals to set the resulting connection port to a communication terminal.

Incidentally, any combinations of the foregoing components, and any conversions of expressions of the present invention from/into methods, apparatuses, systems, recording media, computer programs, and the like are also intended to constitute applicable aspects of the present invention.

### BRIEF DESCRIPTION OF THE DRAWINGS

Fig. 1 is a view showing the overall configuration of a game system according to an embodiment;
Fig. 2 is a view showing the configuration for realizing the communication capability of a game device;
Fig. 3 is a view showing a Bluetooth state transition;
Fig. 4 is a view showing the arrangement of an FHS packet;
Fig. 5 is a view showing the arrangement of a Bluetooth address;
Fig. 6 is a sequence diagram showing a method for establishing a connection in a game system;
Fig. 7 is a sequence diagram showing another method for establishing a connection in a game system;
Fig. 8 is a sequence diagram showing a method for establishing a connection using port designation information;
Fig. 9(a) is a view showing the configuration of a game device according to an embodiment, and Fig. 9(b) is a view showing the configuration of a wireless adapter device according to an embodiment;
Fig. 10 is a view showing the overall configuration of a game system;
Fig. 11 is a view showing the configuration for realizing the communication capability of a wireless adapter;
Fig. 12 is a table showing the relation between the slot and the port allocated thereto;
Fig. 13 is a table showing an example port setting of each slot for four wireless controllers;
Fig. 14 is a view showing an example sequence of a method for establishing a connection using a port designation request;
Fig. 15 is a view showing a modified example of the configuration of a wireless adapter; and
Fig. 16 is a view showing the configuration of a game device provided with a mount portion for mounting a communication module.

### BEST MODE FOR CARRYING OUT THE INVENTION

### [First Embodiment]

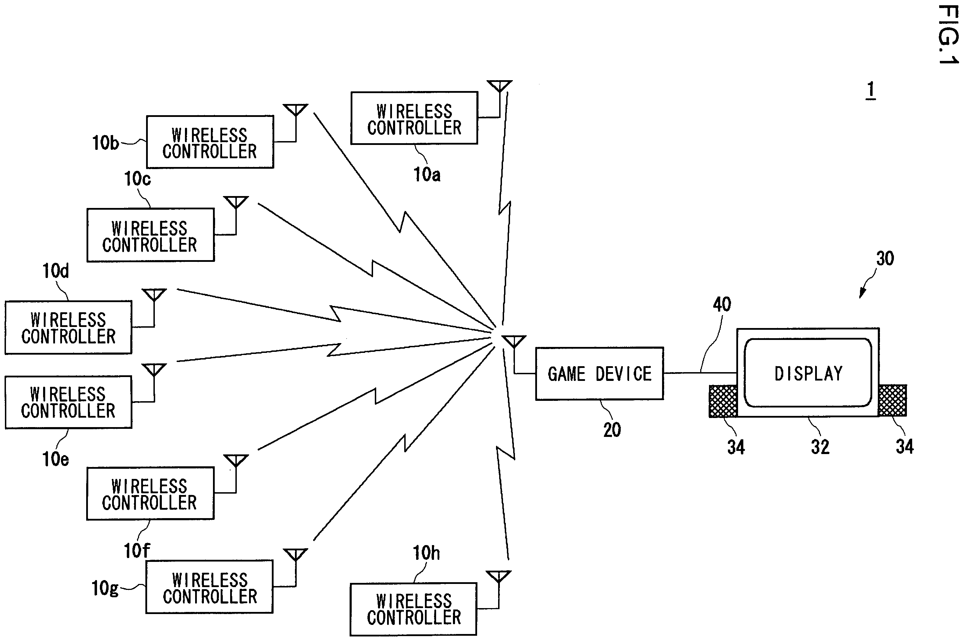

Fig. 1 is a view showing the overall configuration of a game system 1 according to a first embodiment of the present invention. The game system 1 is capable of serving as a communication system which realizes wireless communications between a master and a slave. The game system 1 according to the first embodiment includes, as a user input interface, wireless controllers 10a, 10b, 10c, 10d, 10e, 10f, 10g, and 10h (hereinafter collectively referred to as the "wireless controller 10") for performing wireless communications with a game device 20. In the example, eight wireless controllers 10 are shown; however, the number of the wireless controllers 10 is not limited thereto but may also be 7 or less or 9 or more. The game device 20 is adapted as a communication device which has a wireless communication capability, while the game device 20 is adapted as a terminal device which communicates with the game device 20. The game device 20 creates game AV (Audio Visual) data based on user's game manipulation instructions which are transmitted from the wireless controller 10. An output device 30 includes a display 32 and a speaker 34 to receive game AV data from the game device 20 via a network 40, display a game image on the display 32, and then output game sound through the speaker 34.

The game device 20 and the output device 30 may be wired or wirelessly connected to each other. For example, the network 40 for connecting between the game device 20 and the output device 30 may take the form of a home network constructed by means of a network (LAN) cable or a wireless LAN. When the game device 20 and the output device 30 are connected wirelessly to each other, the game device 20 and the output device 30 can be more freely located as compared to a case where they are wired by a cable or the like. This allows the user not to be restricted to a particular location to play a game.

The Bluetooth technology may also be used to set up a wireless connection between the wireless controller 10 and the game device 20. The game device 20 enables a wireless connection with a plurality of wireless controllers 10. That is, in the game system 1 according to the first embodiment, it is possible to realize point-to-multi-point connections between the game device 20 and the wireless controllers 10. The game device 20 according to the first embodiment includes a plurality of communication modules, and a control unit which controls transmissions of information between the plurality of communication modules. Each of the plurality of communication modules functions to connect to a plurality of wireless controllers 10. In the game system 1, the communication module provided in the game device 20 functions as a parent device or a master, while the wireless controller 10 serves as a slave.

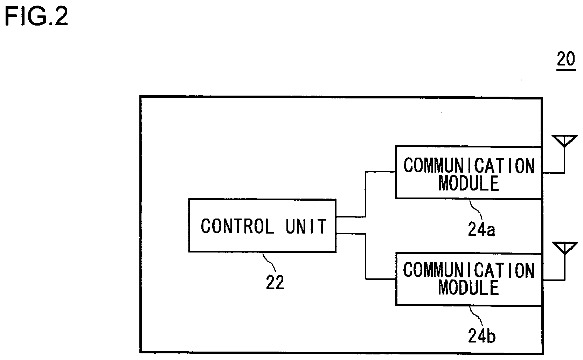

Fig. 2 shows the configuration for realizing the communication capability of the game device 20. The game device 20 includes communication modules 24a and 24b (hereinafter collectively referred to as the "communication module 24") each capable of wirelessly connecting to a plurality of slaves, and a control unit 22 for controlling transmissions of information between the communication modules. The game device 20 may also include three or more communication modules 24.

The communication capability according to the first embodiment is realized in the game device 20 by a CPU, a memory, or a program loaded in the memory. Shown here is the functional blocks that are realized by a combination thereof. The program may be incorporated into the game device 20, or externally supplied in the form of a program stored in a recording medium. It will be therefore understood by those skilled in the art that these functional blocks can be realized in any form, i.e., only by hardware, only by software, or by a combination of hardware and software.

A plurality of communication modules 24 have substantially the same communication capability and an overlapped coverage. The plurality of communication modules 24 are located physically very close to each other as compared to their coverage, and preferably have substantially the same coverage. Accordingly, in the game system 1, the wireless controller 10 located within the coverage of the communication module 24a is also located within the coverage of the communication module 24b, such that the wireless controller 10 can be connected to any one of the communication modules 24a and 24b. As shown, the control unit 22 may be separated from the communication module 24, but may also be incorporated into the function of one communication module 24 to control transmissions of information to and from the other communication module 24. In this case, the one communication module 24 itself is to control transmissions of information to and from the other communication module 24.

The communication module 24 may be of a type which is incorporated into the main body of the game device, or alternatively, a type which is externally connected to the game device 20. In the latter case, the game device 20 has a mount portion in which the communication module 24 is mounted, while the control unit 22 controls transmissions of information between the plurality of communication modules 24, with the communication module 24 being mounted in the mount portion. The game device 20 may incorporate all the communication modules 24 or some of the communication modules 24, or may be connected with all the communication modules 24 via the mount portion.

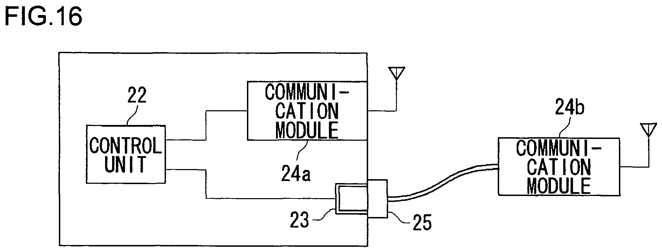

For example, the game device 20 may include one communication module 24 in the housing at the time of delivery, and one or more mount portions for allowing a communication module to be additionally connected thereto. Fig. 16 shows the configuration of a game device provided with a mount portion in which a communication module is externally mounted. The game device 20 includes an internal communication module 24a, a mount portion 23 in which an external communication module 24b is mounted, and the control unit 22 which controls transmissions of information between the communication modules. The mount portion 23 may be a USB (Universal Serial Bus) port, and the additional external communication module 24b can be connected to the game device 20 by connecting its connection terminal 25 to the USB port. Suppose that the game device 20 connects to eight wireless controllers 10 using the Bluetooth technology. In this case, only up to seven controllers can be connected thereto at the same time. Accordingly, when no external communication module 24b is available, the wireless controllers 10 are divided, e.g., into two groups each containing four controllers, so that the communication module 24a can connect to each group. In this case, the communication module 24a can be connected apparently at the same time to the eight wireless controllers 10 by switching with predetermined timings between the connections to the groups. On the other hand, when the external communication module 24b is available, the communication modules 24a and 24b can be connected to four wireless controllers 10, respectively, as discussed later. The control unit 22 detects whether the external communication module 24b is connected to the mount portion 23. If the communication module 24b is not connected thereto, the control unit 22 controls the communication module 24a so as to connect to a plurality of wireless controllers 10. If the communication module 24b is connected to the mount portion 23, the control unit 22 controls the two communication modules 24a and 24b so as to connect to a plurality of wireless controllers 10. To allow the communication module 24a to connect to eight or more wireless controllers 10 by switching the connections therebetween, a game application to be executed may preferably require no tight latency or a low delay.

In the first embodiment, the control unit 22 can control transmissions of information relating to a slave between a plurality of communication modules 24. A plurality of communication modules 24 controlled by the control unit 22 may be all incorporated into the game device 20 as shown in Fig. 2. Alternatively, as shown in Fig. 16, a combination of internal and external communication modules 24 may be incorporated into the game device 20, or all the communication modules 24 may be of an external type. When a plurality of communication modules 24 are included in the housing, the control unit 22 controls transmissions of information relating to a slave between the communication modules 24. On the other hand, at least one communication module 24 may be incorporated into the housing and at least one communication module 24 may be externally provided via the mount portion 23 such as a USB port. In this case, the control unit 22 controls transmissions of information relating to a slave between the internal communication module 24 and the communication module 24 connected via the mount portion 23. On the other hand, when a plurality of communication modules 24 are externally provided, the control unit 22 controls transmissions of information relating to a slave between the external communication modules 24.

Now, an explanation will be given to an example where Bluetooth is employed as a wireless communication protocol and the wireless controller 10 is a Bluetooth terminal.

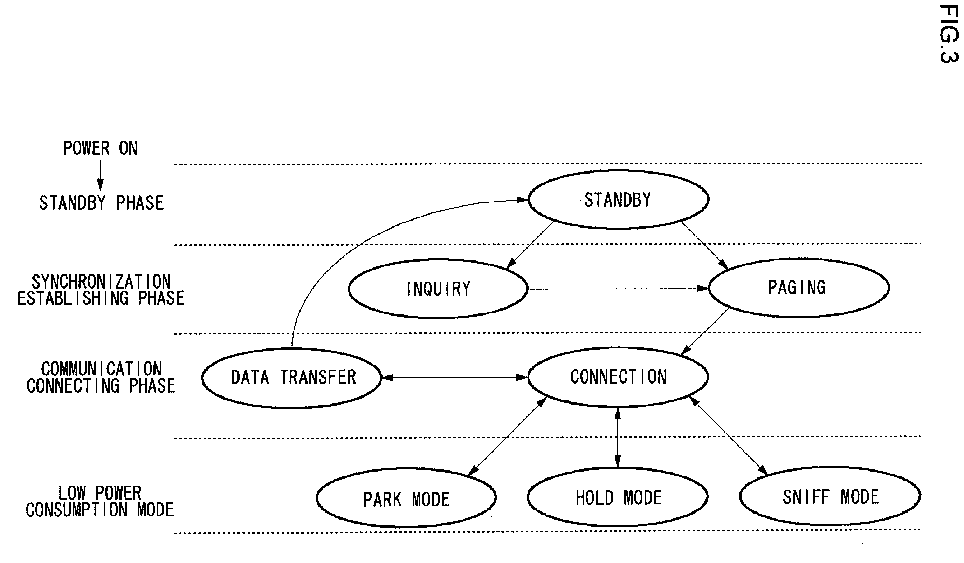

Fig. 3 shows a Bluetooth state transition. As shown, the state of a Bluetooth terminal can be divided into a standby phase, a synchronization establishing phase, a communication connecting phase, and a low power consumption mode.

Immediately after the wireless controller 10 has been powered on or disconnected from a communication link, the wireless controller 10 enters a "standby" state. In the "standby" state, the wireless controller 10 neither transmits nor receives data.

In the synchronization establishing phase, there are two states available: one in which the game device 20 sends a connection reference or an "inquiry" to peripheral terminal devices including the wireless controller 10, and the other in which the game device 20 recognizes and "pages" the wireless controller 10. In the "inquiry" state, the game device 20 broadcasts an IQ (inquiry) packet to nearby terminal devices. The wireless controller 10 that has received the IQ packet transmits an FHS (Frequency Hop Synchronization) packet, which contains a Bluetooth address and Bluetooth clock information, back to the game device 20. In the transmission and reception at this point in time, a frequency hopping pattern has not yet been agreed upon between the game device 20 and the wireless controller 10, and thus, a fixed hopping pattern is used which is defined for dedicated use with inquiry.

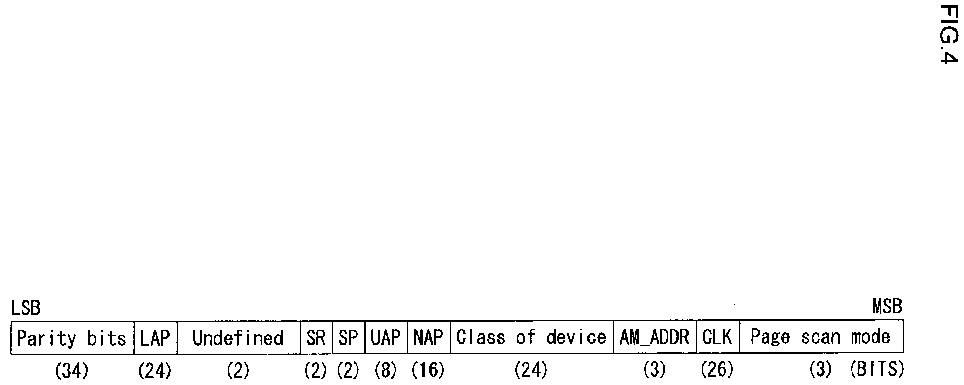

Fig. 4 shows the arrangement of an FHS packet. In the packet, LAP (Lower Address Part), UAP (Upper Address Part), and NAP (Non-significant Address Part) constitute a Bluetooth_ADDR which is the unique address of a Bluetooth terminal.

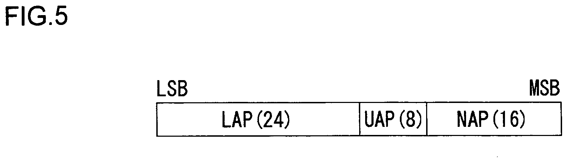

Fig. 5 shows the arrangement of a Bluetooth address (Bluetooth_ADDR). As shown, the Bluetooth address contains a total of 48 bits, including 24 bits of LAP, 8 bits of UAP, and 16 bits of NAP.

Referring back to Fig. 3, in the "page" state, the game device 20 receives an FHS packet from the wireless controller 10 to know what wireless controllers 10 are present, and then transmits an ID packet to a particular wireless controller 10. Upon reception of a response to the ID packet from the particular wireless controller 10, the game device 20 transmits the FHS packet to the wireless controller 10 indicating its own address and clock to the wireless controller 10. This makes it possible for the game device 20 and the wireless controller 10 to share the same hopping pattern.

A page will cause a piconet to be formed between the wireless controller 10 and the game device 20, which enter a "connected" state. A piconet means a network which will be formed in an ad hoc fashion between Bluetooth terminals when they are brought close to each other. One piconet can include up to eight Bluetooth terminals. In one piconet, the communication module 24 of the game device 20 serves as a master, and each communication module 24 can connect to up to seven wireless controllers 10. A connected wireless controller 10 is assigned, by the communication module 24, a slave identifier, i.e., a 3-bit address (1 to 7) that is given to a wireless controller 10 being connected. This slave identifier is referred to as AM_ADDR (Active Member Address). In the "connected" state, a control packet is transmitted and received to set up a communication link, thereby enabling "data transfer." When a data transfer is completed and the communication link is disconnected, the wireless controller 10 is placed back in the standby state.

The wireless controller 10, serving as a slave, can transition from the connected state to three types of low power consumption modes: a "park mode," "hold mode," and "sniff mode." On the other hand, the communication module 24 of the game device 20, serving as a master, can transition from the connected state to the "hold mode."

The wireless controller 10 in the "park mode" is kept synchronized with the piconet, i.e., with the hopping pattern and the master clock. However, the wireless controller 10 cannot exchange a packet with the game device 20. The wireless controller 10 in this state receives data from the game device 20 at regular time intervals (beacon cycles), and thus can immediately participate in the piconet if required. In the park mode, the wireless controller 10 returns the assigned AM_ADDR to the game device 20 for the time being. Accordingly, if there is no available slave identifier, the wireless controller 10 cannot participate in the piconet at once even when it wants to take part in the piconet again. Conversely, the communication module 24 assigns an 8-bit park slave identifier to the wireless controller 10 which is going to enter the park mode. The communication module 24 can manage up to 255 terminal devices being parked, and allows only a required wireless controller 10 to participate in the piconet whenever necessary.

While being kept synchronous to the piconet, the wireless controller 10 in the "hold mode" and the game device 20 conduct neither transmission nor reception during a certain period of time setting (hold time), but restart communications after the hold time has elapsed.

The wireless controller 10 in the "sniff mode" can perform transmission and reception at regular time intervals (sniff intervals), and thus reduce power consumption during the other periods of time.

In the game system 1 according to the first embodiment, the game device 20 includes a plurality of communication modules 24. The plurality of communication modules 24 each can independently broadcast an IQ packet for inquiry and as well receive an FHS packet from a wireless controller 10 to transmit an ID packet for paging. Suppose that the plurality of communication modules 24 issue an inquiry at the same time. In this case, upon reception of an FHS packet, each communication module 24 transfers information relating to the wireless controller 10, which can be obtained from the FHS packet, to the control unit 22. This information includes a unique address of the wireless controller 10, e.g., the Bluetooth_ADDR if the wireless controller 10 is a Bluetooth terminal.

Based on this information, the control unit 22 knows the wireless controller 10 that has returned a response to each communication module 24, and then defines the wireless controller 10 for which each communication module 24 is allowed to be responsible. When the plurality of communication modules 24 issue an inquiry simultaneously in this manner, the control unit 22 determines the connected party of each communication module based on the information transferred from each communication module 24. For example, suppose that the control unit 22 has received information relating to the same wireless controller 10 from a plurality of communication modules 24. In this case, the control unit 22 may allow the communication module 24 that has first transmitted the information to the control unit 22 to take the responsibility for the wireless controller 10, while instructing those communication modules 24 that have transmitted the information later not to connect to the wireless controller 10.

When a plurality of communication modules 24 issue an inquiry at the same time as described above, there is a possibility of the radio signals colliding with each other. A transmission error caused by a collision of signals would result in an elongated processing time for a connection sequence. Now, shown below is a method for avoiding a collision of signals in establishing a wireless connection. It is assumed that the game device 20 has a button (hereinafter referred to as the "link button") for instructing the execution of a sequence for connecting to the wireless controller 10, such that the user depresses the link button to thereby initiate the connection sequence. For convenience in description, such an example will be taken in which the communication module 24 of the game device 20 is referred to as the "master" and the wireless controller 10 referred to as the "slave," where as shown in Fig. 2, the game device 20 has two masters, i.e., the communication module 24a serving as a first master and the communication module 24b serving as a second master.

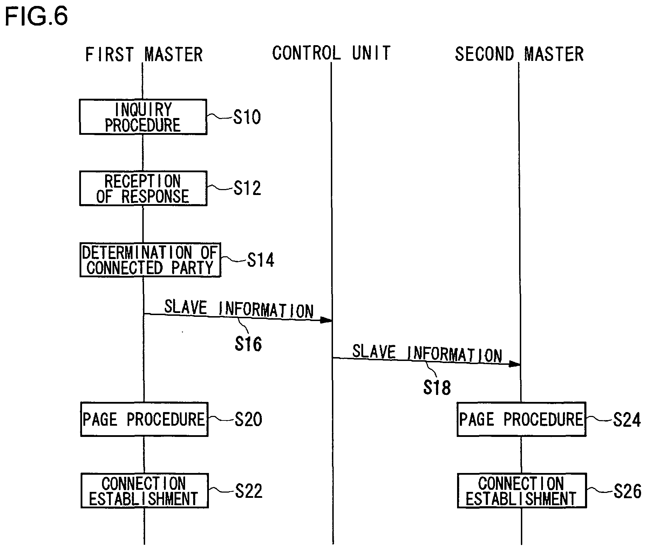

Fig. 6 shows an example sequence for a method of establishing a connection in the game system 1. The user powers on the slave or the wireless controller 10 and then depresses the link button of the game device 20. The slave performs an inquiry scan and a page scan, and is able to respond to an IQ packet and an ID packet from a master of the game device 20.

In response to the depression of the link button by the user, the first master of the plurality of masters performs the inquiry sequence for the peripheral slaves to establish a connection therewith (S10) . More specifically, the first master broadcasts the IQ packet. At this time, any master other than the first master, i.e., the second master in this example, does not perform the inquiry sequence. In the first embodiment, a plurality of masters are not allowed to perform the inquiry sequence at the same time, thereby avoiding possible packet errors caused by a collision of IQ packets. For example, the first master of the plurality of masters may be pre-defined as a master for performing the inquiry sequence, or alternatively, in response to the depression of the link button, the control unit 22 may instruct the first master to perform the inquiry sequence. The inquiry sequence may be performed by the second master; however, in either case, one of the masters performs the inquiry sequence.

A slave that has received the IQ packet returns an FHS packet as a response to it. The first master receives the FHS packet from the slave (S12) and thus acquires information relating to all the slaves that have returned their response. This allows the first master to know the Bluetooth address and Bluetooth clock information of the peripheral slaves.

Subsequently, the first master determines the slave that is to be connected to the first master itself (S14). At this time, the first master determines, as a party to be connected to the first master itself, at least some of the plurality of slaves that have returned their response. Those slaves that have been determined not to establish a connection with the first master are a party to be connected to the second master. For example, suppose that eight or more slaves have returned their response. In this case, however, a Bluetooth maser can establish a connection only with up to seven salves at the same time. Accordingly, the first master determines seven or less slaves as a party to be connected thereto, and thus needs to specify that the remaining slaves are not to be connected to the first master. This may happen when the game device 20 executes a game program that allows eight or more users to play at the same time, with eight or more wireless controllers 10 involved therein. Accordingly, in this case, under the constraints of Bluetooth, the first master needs to determine seven or less slaves as a connected party.

On the other hand, suppose that seven or less slaves have returned their response. In this case, the first master can set up a wireless connection with all the slaves by itself, but may preferably determine a connected party in consideration of latencies, i.e., delay times required for data transfer. One master supporting communications with more slaves will provide less processing speeds as compared to supporting communications with fewer slaves. Particularly, in the game system 1 which utilizes this communication capability, a game manipulation instruction entered by the user on the wireless controller 10 needs to be processed in real time and reflected on the game image that is displayed on the display 32. One frame of game image has a time length of 16.7 ms. Accordingly, to prevent the continuity of the game from being impaired, the game device 20 has to process the game manipulation inputs from all the users within this period of time. To reduce the latency of the whole system, a plurality of slaves may be preferably divided efficiently between the first and second masters. Accordingly, even when seven or less slaves have returned their response, the first master may preferably determines some of the slaves as a connected party, with the remaining slaves determined as a party to be connected to the second master. Likewise, even when eight or more slaves are involved, the first master may preferably not determine seven slaves, i.e., the maximum number of connectable slaves allowed by the Bluetooth specification, as a party to be connected to the first master, but may efficiently divide the slaves between the first and second masters.

For example, suppose that up to eight players are allowed to play a game at the same time. In this case, the control unit 22 may limit a maximum number of slaves connected to each of the first and second masters to four slaves, and pre-set the maximum number in each of the first and second masters. Under this condition, when four or less slaves have returned their response, the first master may determine to connect to all the slaves. When five or more slaves have returned their response, the first master may determine to connect to any four of the slaves, and allow the remaining slaves to be connected to the second master. The arbitrary four slaves may be determined according to the order in which they have returned their response, or may be determined randomly from the slaves that have returned their response. Alternatively, the first and second masters may be loaded evenly to thereby provide preferable latencies to the game device 20 as a whole. To this end, the first master may also divide a plurality of slaves, which have returned their response, into groups according to the number of the masters and slaves involved, so that the masters are connected with a substantially equal number of slaves. For example, when four slaves have returned their response, two slaves may be allocated to each master in order to evenly load each master. This makes it possible to reduce the difference in load between the masters, thereby providing stabilized latencies. In particular, in the game system 1, since all the wireless controllers 10 preferably provide their response in the same manner, it is effective to load the masters evenly.

Having determined a connected party, the first master transfers information relating to the slave to the control unit 22 (S16). Hereinafter, the information to be transferred is referred to as "slave information." The slave information to be transferred from the first master to the control unit 22 includes at least information relating to a slave with which the first master does not establish a connection. For purposes of communication control by the control unit 22, the first master may transfer to the control unit 22 the information relating to all the slaves that have returned their response. Upon reception of the slave information from the first master, the control unit 22 transfers to the second master the information relating to a slave with which the first master does not establish a connection (S18). This causes the second master to recognize a party to be connected thereto. Accordingly, the second master can acquire the information relating to a slave to connect to without performing an inquiry sequence by itself, thereby making it possible to realize the connection sequence in the game system 1 in a short period of time.

The first master performs a page procedure on a salve to which the first master has determined to connect (S20), and then establishes a wireless connection with the slave (S22). Upon the establishment of the connection, the first master does not enter the synchronization establishing phase, and the slave with which the first master has established a connection performs neither an inquiry scan nor a page scan. Likewise, the second master performs an inquiry procedure on a slave of which the control unit 22 has informed as a party to be connect to the second master (S24), and establishes a wireless connection with the slave (S26). Upon the establishment of the connection, the second master does not enter the synchronization establishing phase, and the slave with which the second master has established a connection performs neither an inquiry scan nor a page scan.

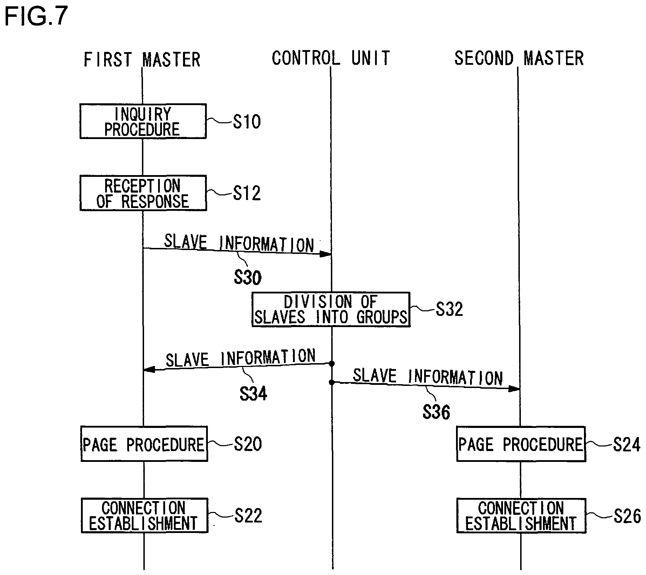

Fig. 7 shows another example of a method for establishing a connection in the game system 1. This example follows the same steps as those of the example shown in Fig. 6 from S10, where the first master performs an inquiry sequence, to S12, where the first master receives a response from a plurality of slaves.

In this example, after having received a response from a plurality of slaves, the first master does not determine a connected party but transfers all the received slave information to the control unit 22 (S30). The control unit 22 has predefined a limited maximum number of slaves to which each master connects, and thus divides the slaves between each master so that the number of slaves assigned to each master is within the maximum number (S32). As described above, the control unit 22 preferably divides a plurality of slaves into a substantially equal number of slaves to which each master connects. The control unit 22 transfers to the first master the information relating to those slaves that are assigned to the first master (S34), while transferring to the second master the information relating to those slaves that are assigned to the second master (S36). Subsequently, the first master performs an inquiry sequence based on the transferred slave information (S20) to establish a wireless connection (S22). Likewise, the second master also performs an inquiry sequence based on the transferred slave information (S24) to establish a wireless connection (S26). In this manner, the control unit 22 divides the slaves between each master. This eliminates the need for the first or second master to set a connected party by itself, thereby making it possible to simplify the function of each master.

According to the method for establishing a connection shown in relation to Figs. 6 and 7, the slave or the wireless controller 10 establishes a wireless connection with the communication module 24 without concerning the connection port on the side of the game device 20. When the game device 20 and a game device controller are wired to each other as in the conventional manner, the connector of the controller is inserted into a socket of the game device 20, thereby allowing the user to recognize the connection port at the position of the socket. On the other hand, according to the aforementioned method for establishing a connection, the game device 20 assigns the connection ports, and thus the user cannot select the connection port at the time of establishing a connection. During a game, the connection port is to determine the user's ordinal position as a player, and thus the user needs to know the connection port at least when selecting a character at the start of the game. Additionally, suppose that the game device 20 and the wireless controller 10 are disconnected from each other due to a communication failure in the wireless link or battery depletion in the wireless controller 10. Even in this case, the user needs to know the connection port in order to rejoin the game using the same character. In this context, for example, the wireless controller 10 may be provided with a display unit such that when a connection is established and thus the port is determined, the port number is displayed on the display unit. When the user wants to use a wireless controller 10 that is connected to a particular connection port, the user can refer to the port number displayed on the display unit to select the wireless controller 10. This allows the user to recognize the port number of his/her own wireless controller 10, thereby realizing a subsequent smooth game manipulation.

In the foregoing example, the game device 20 assigns the connection port; however, apart from this example, the wireless controller 10 may also positively designate the connection port. For example, assume that the game device 20 has a total of eight connection ports, from port 1 to port 8, in which ports 1 to 4 are assigned to the communication module 24a or the first master, while ports 5 to 8 are assigned to the external communication module 24b or the second master. These assignments may be dynamically carried out by the control unit 22 or may also be predefined as a default.

In this example, the wireless controller 10 has port designation information for designating a particular port to connect to. For example, the port designation information may be set by the user upon powering on the wireless controller 10, or may be provided inherently to the wireless controller 10. As an example, the inherent provision may be conceivably made when the wireless controller 10 is not a usually employed controller but a special one, and the game requires the connection port of the special controller to be designated. In this embodiment, since a plurality of masters are involved, the port designation information is to designate a master having the port to which a connection is made, and serves as master designation information as well.

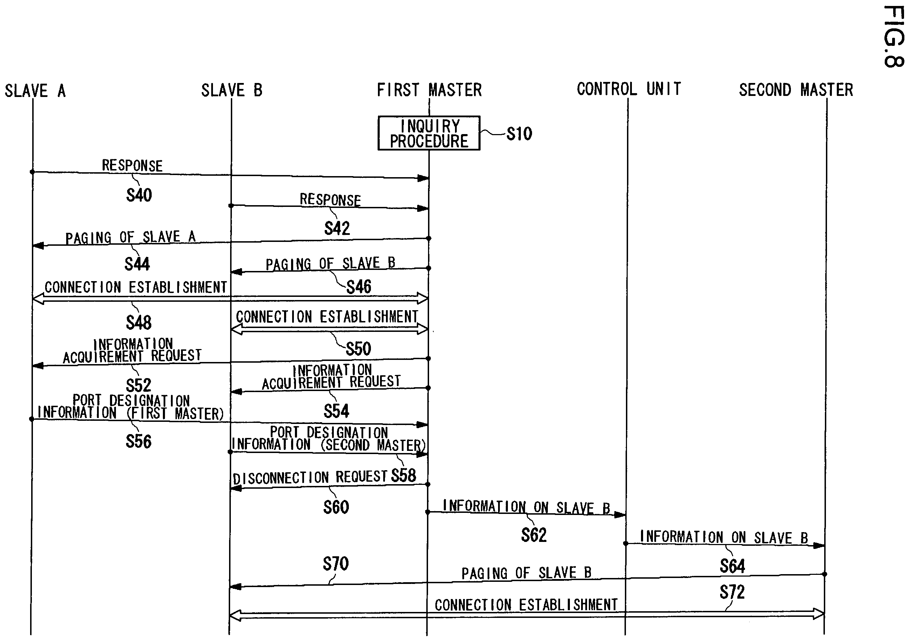

Fig. 8 shows an example of a method for establishing a connection using port designation information. Here, such an example is taken in which two slaves, slave A and slave B, are involved, the slave A having the port designation information designating the port of the first master, the slave B having the port designation information designating the port of the second master.

In the beginning, the first master performs an inquiry procedure (S10), and the peripheral slaves A and B each return their response (S40 and 42). The response is sent back using the FHS packet in accordance with the Bluetooth specification. When other communication protocol used allows for containing the port designation information in the response to the inquiry, the response itself may preferably contain the port designation information in order to reduce the time required for making a connection. More preferably, the FHS packet may also contain the port designation information when Bluetooth will allow, in the future, any user information to be included in the FHS packet.

Upon reception of a response, the first master pages the slaves A and B (S44 and S46), and establishes a wireless connection with the slaves A and B (S48 and S50). Subsequently, the first master sends an information acquirement request to the slaves A and B (S52 and S54). Upon reception of this request, the slaves A and B return port designation information to the first master (S56 and S58). The port designation information sent from the slave A designates a port of the first master, while the port designation information sent from the slave B designates a port of the second master.

Now, the first master refers to the port designation information from the slave A to determine that the port designation information designates its own port, i.e., any one of the ports 1 to 4. For this reason, the first master and the slave A are connected in a manner as required by the slave A, and the AM_ADDR assigned by the first master to the slave A and the port number designated by the slave A are correlated with each other. On the other hand, the first master refers to the port designation information from the slave B to determine that the port designation information designates other than its own port, i.e., any one of the ports 5 to 8 that are managed by the second master. The first master and the slave B are not connected in a manner as required by the slave B, and this connection is preferably changed.

To this end, the first master sends a disconnect request to the slave B (S60), and then disconnects the connection between the first master and the slave B. Subsequently, the first master sends to the control unit 22 the information relating to the slave B that is not to be managed by the first master (S62), and the control unit 22 transfers the information relating to the slave B to the second master (S64). The slave information is transmitted to the second master in the manner described in relation to the sequence shown in Figs. 6 and 7. The second master pages the slave B (S70), and establishes a connection with the slave B (S72). Thus, the second master and the slave B are connected in a manner as required by the slave B, and the AM_ADDR assigned by the second master to the slave B and the port number designated by the slave B are correlated with each other. As such, the slave or the wireless controller 10 can positively designate the connection port. Additionally, only one master performs the inquiry procedure, thereby making it possible to avoid a collision of IQ packets. It is also possible to reduce the time required for making a connection, by sending the slave information acquired by one master to the other master.

In Fig. 8, shown is the case where two slaves are involved. However, the like processing can be performed to establish a connection in the presence of three or more slaves. When a plurality of slaves transmit overlapped port designation information, the first master transmits to the slaves a warning about the designated port overlapping among the slaves. Various ways can be thought of to indicate the warning. For example, the warning may be displayed on the display unit provided in a slave. Alternatively, a sound warning may be given to a slave having a speaker. In particular, when the port has been designated by a user instruction, the user can re-designate a port to thereby avoid an overlapped port designation.

As described above, even when the game device 20 has eight ports and is required to connect to eight wireless controllers 10, the communication module 24 or the master can establish a connection only with up to seven wireless controllers 10 at the same time. Accordingly, in this case, seven wireless controllers 10 need to be divided, and the remaining one controller needs to be assigned and connected to an appropriate master.

In the foregoing example, the description was given to the case where all the wireless controllers 10 designate ports. However, it is also possible to appropriately set ports even when port-designating and non-port-designating wireless controllers 10 are present at the same time. In this case, it is preferable to provide control such that the port-designating wireless controller 10 may be assigned the port on a priority basis, whereas the non-port-designating wireless controller 10 may be assigned the remaining port. In this case, it is preferable that with the connection of the non-port-designating wireless controller 10 maintained, the port-designating wireless controllers 10 be assigned ports, and after all the port-designating wireless controllers 10 have been assigned their ports, the remaining ports be assigned to the non-port-designating wireless controllers 10.

In the foregoing, the present invention has been described in accordance with the first embodiment. The first embodiment was illustrated only by way of example. It is thus to be understood by those skilled in the art that various modifications may be made to each of these components and each combination of these processes, and these modifications also fall in the scope of the present invention.

For example, in the first embodiment described above, such an example was shown in which a plurality of available communication modules 24 are connected to wireless controllers 10 of the same type. In the game system 1, from the viewpoint of effectively using a plurality of communication modules 24, the game device 20 may preferably be wirelessly connected not only to the game device wireless controller 10 but also to various types of slaves.

The control unit 22 may also divide a plurality of slaves between each master according to the latency level setting that is provided to each slave. The latency level indicates an allowable delay level, i.e., whether a low delay response is required or a high delay response is allowed. This level may be preset to a slave as a value unique to the slave, or may be set by the user when the slave is powered on or the like. For example, in the presence of two slaves which require a low delay, the slaves may be connected respectively to the first and second masters, thereby satisfying the low delay requirement. On the other hand, in the presence of two slaves which have no problem with a high delay, both may be connected to one master. On the other hand, suppose that two slaves which require a low delay and other two slaves which have no problem with a high delay are present at the same time. In this case, it is also possible to assign one slave which requires a low delay and another slave which have no problem with a high delay to each master, thereby satisfying the delay requirements of the plurality of slaves to be connected. At this time, the maximum number of slaves to be connected to one master may be defined according to the latency level. For example, the setting may be provided such that the maximum number of slaves which require a low delay is reduced, whereas the maximum number of slaves which have no problem with a high delay may be increased. In this manner, the slaves can be efficiently grouped based on the latency, thereby providing an optimized communication environment to the game system 1.

The control unit 22 may assign, to one master, a plurality of slaves which have a common purpose of use. For example, when the game device 20 is connected to a network such as the Internet, the first master may be specifically used for the wireless controller 10, whereas the second master may be assigned to various types of devices to be connected to the network. The wireless controllers 10 can be grouped for communication processing by the first master, thereby providing a common communication environment to the wireless controllers 10.

The control unit 22 may also assign, to one master, a plurality of slaves which have a common function. Like the slaves which have a common purpose of use, this modified example can also provide a common communication environment for those slaves which have a common function.

Furthermore, the control unit 22 may use at least one master for searching slaves. To add a wireless controller 10 to a game when played using all of a plurality of communication modules 24, the game needs to be temporarily stopped to establish a connection all over again. This is unpreferable because the real-time requirement of the game is ruined. To avoid this situation, one of a plurality of masters involved may be made available for searching slaves, allowing the master only to perform only the inquiry procedure. The search master may receive an FHS packet from the additional wireless controller 10 to transfer the FHS packet to another communication master, which in turn performs the page procedure. This allows the new user to participate in the game without impairing the continuity of the game. To acquire the port designation information of the new wireless controller 10 as well, the search master establishes a connection once with the controller to acquire the port designation information. Then, the master transfers the Bluetooth address, the Bluetooth clock, and the port designation information to the control unit 22, and thereafter disconnects the connection with the wireless controller 10. Based on the information, the master having a port designated can establish a connection with the additional wireless controller 10 in a short period of time without affecting the communications being made during the game.

### [Second Embodiment]

In the first embodiment, the description was given to the method for realizing wireless communications between the game device and a game device controller. In a conventional game system, the game device and a game device controller are typically wired to each other by a cable. In this case, one end of the cable is fixed to the controller and the other end of the cable is provided with a connector, which is in turn inserted into a slot (socket) of the game device, thereby assuring the connection between the controller and the game device. In general, the game device has a plurality of slots, e.g., two slots formed therein. When two users play a game, the connector of each controller is inserted into each of the slots. When three or more users play a game, each slot of the game device is connected with an optional adapter which has four expansion slots. The connector of a controller can be inserted into a slot of the adapter, thereby allowing up to eight players to participate in the game.

As in the first embodiment, a communication module which can make a wireless connection with a plurality of slaves is employed to allow a plurality of users to play a game at the same time. In this case, it is preferable to realize an environment in which both a wired controller and a wireless controller are not allowed to be used at the same time, but only one of them is used. This is also preferable in order to realize uniform latencies by employing a common communication protocol. On the other hand, the communication module may not be adapted to establish a wireless connection with a plurality of slaves, but for example, only with a single slave. Even in this case, it is also preferable to realize an environment in which both a wired controller and a wireless controller are not allowed to be used at the same time, but only one of them is used.

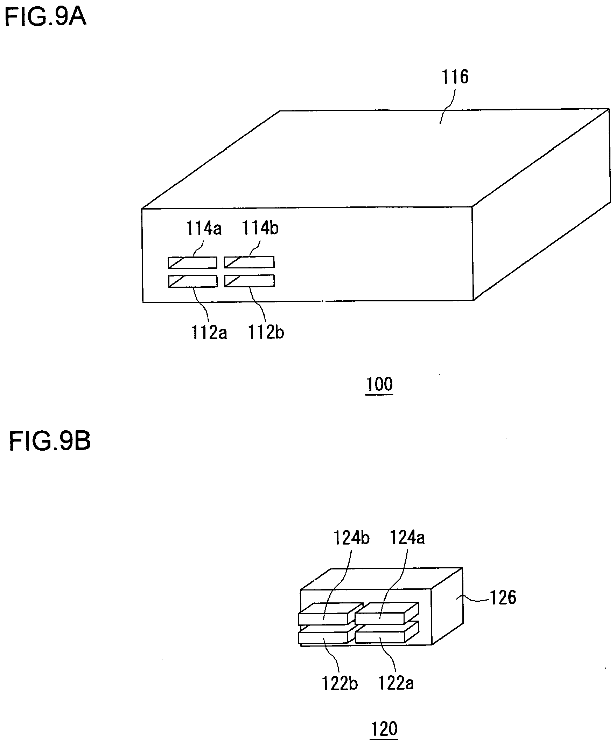

Fig. 9(a) shows the configuration of a game device 100 according to a second embodiment of the present invention. The game device 100 has a housing 116, in which included are slots 112a and 112b (hereinafter collectively referred to as the slot 112) for a wired controller, and slots 114a and 114b (hereinafter collectively referred to as the slot 114) for a card-type memory device. To use a conventional wired controller, the connector attached to an end of a cable extended from the controller is inserted into the slots 112a and 112b. This arrangement allows for providing game manipulation inputs using the controller. Additionally, a memory card is inserted into the slots 114a and 114b for reading and writing game data thereon. In general, the memory card is utilized to store user game data. The memory card is inserted into the slot 114a when the controller is connected to the slot 112a, whereas the memory card is inserted into the slot 114b when the controller is connected to the slot 112b.

The game device 100 has a plurality of slots 112 to enable a plurality of players to participate in a game. When a conventional wired controller is directly connected to the slot 112, one connection port (hereinafter simply referred to as the port) is allocated to the slot 112, so that the port number is used to transmit signals between the CPU of the game device 100 and the controller. To allow three or more users to play a game at the same time using wired controllers, an adapter for expanding the number of slots is connected to the slot 112 and the slot 114.

An existing expansion adapter is provided with a plurality of slots for use with a controller and a memory card. A port is defined for and allocated to each of these slots just as for the slot 112 and the slot 114 of the game device 100. The expansion adapter is adapted to include four controller slots and four memory card slots.

In the expansion adapter, the four controller slots are electrically connected with a controller slot switching portion while the four memory card slots are electrically connected with a memory card slot switching portion. The memory card slot switching portion connects between any one of the four controller slots and the slot 112 of the game device 100, while the memory card slot switching portion connects between any one of the four memory card slots and the slot 114 of the game device 100. Connection switching control is provided to the controller slot switching portion and the memory card slot switching portion by means of a communication control unit included in the expansion adapter. Two expansion adapters can be connected to the slots 112a and 114a and to the slots 112b and 114b, respectively, thereby allowing up to eight users to play a game at the same time. In the foregoing, the description was intended for the connection between the game device 100 and a conventional wired controller. In the second embodiment, it is assumed to employ wireless controllers for communications, and thus there is no concept of allocating slots by inserting controller connectors therein. However, even with the wireless controller, such a "port expansion" capability as is provided by the conventional expansion adapter is also realized to enable a plurality of users to play a game at the same time.

Fig. 9(b) shows the configuration of a wireless adapter device 120 according to the second embodiment of the present invention. The wireless adapter device 120 (hereinafter simply referred to as the wireless adapter 120) can transmit and receive signals to and from a wireless controller, and is incorporated into the game device 100 to function as a device for relaying a signal transmission between the game device 100 and the wireless controller. This wireless adapter 120 can provide an environment, for connecting to a wireless controller, to the game device 100 which is originally intended to be wired to a controller as shown in Fig. 9(a). To this end, the wireless adapter 120 transmits a signal from the wireless controller to the game device 100 using a communication protocol that has been employed by the conventional wired controller, and as well transmits a signal from the game device 100 to the wireless controller using a predetermined wireless communication protocol. This makes it possible to use a wireless controller only by attaching the wireless adapter 120 to the game device 100, i.e., without the need of replacing the game device 100.

The wireless adapter 120 has a housing 126, in which included are connectors 122a and 122b (hereinafter collectively referred to as the connector 122) corresponding to the slots 112a and 112b of the game device 100, and connectors 124a and 124b (hereinafter collectively referred to as the connector 124) corresponding to the slots 114a and 114b. A plurality of connectors 122 and 124 function as a connecting portion that is provided corresponding to a plurality of slots 112 and 114 of the game device 100.

The connector 122 has the same shape as that of the wired controller, and the connector 124 has the same shape as that of the portion into which the memory card is inserted. The connector 122 and the connector 124 are located in accordance with the positional relationship between the slots 112 and 114 of the game device 100. More specifically, the positional relationship between the connectors is defined such that when the wireless adapter 120 is attached to the game device 100, all the connectors are inserted simultaneously into the slots, i.e., the connector 122a into the slot 112a, the connector 122b into the slot 112b, the connector 124a into the slot 114a, and the connector 124b into the slot 114b.

The wireless adapter 120 according to the second embodiment blocks all the wired controller slots at the same time, i.e., the slots 112a and 112b with the connectors 122a and 122b. The wireless adapter 120 shown in Fig. 9(b) is designed to simultaneously block the memory card slot 114 as well. The connectors 122a and 122b formed integrally with the housing 126 enables the plurality of connectors 122 to electrically connect to all the slots 112 at the same time, thus preventing any of the slot 112 from being vacant. With the wireless adapter 120 being attached to the game device 100, this arrangement disables the user from inserting the connector of a wired controller into the slot 112, thereby preventing a wired controller and a wireless controller from being used at the same time.

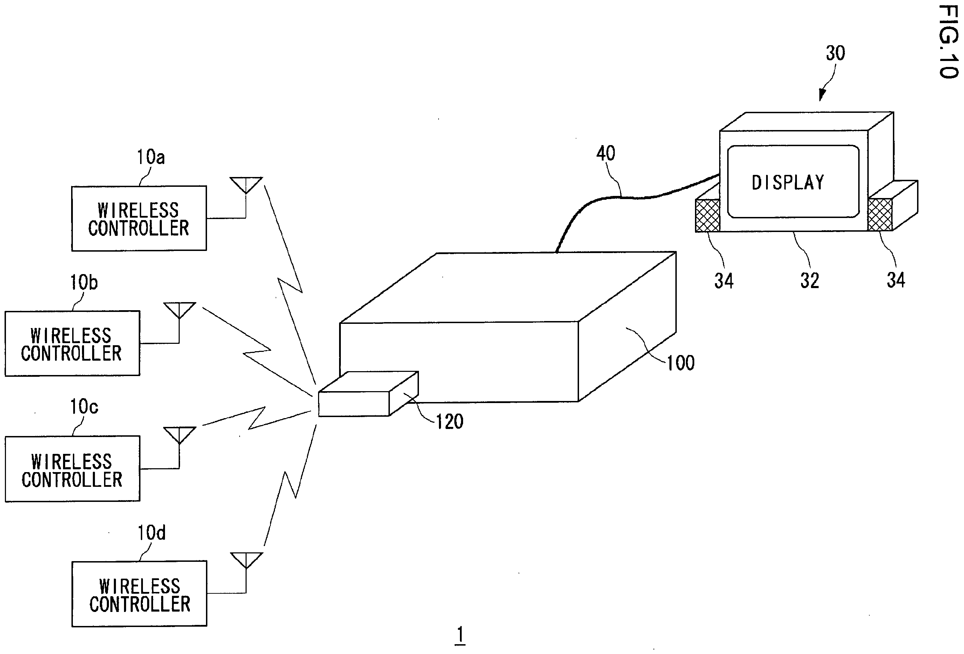

Fig. 10 shows the overall configuration of a game system 1 according to the second embodiment of the present invention. A plurality of connectors of the wireless adapter 120 are connected to corresponding slots in the game device 100, respectively. The game system 1 serves as a communication system for realizing wireless communications between a master and a slave. The game system 1 includes, as a user input interface, wireless controllers 10a, 10b, 10c, and 10d (hereinafter collectively referred to as the "wireless controller 10") for performing wireless communications with the game device 100 via the wireless adapter 120. The wireless controller 10 may also have a capability to be connected with a memory card. In the game system 1, the wireless controller 10 serves as a slave, and the wireless adapter 120 serves as a master. In the example, four wireless controllers 10 are shown; however, the number of the wireless controllers 10 is not limited thereto but may also be 3 or less or 5 or more. As described in relation to Fig. 9, the game device 100 is designed as an electronic device having the slot 112 for making a wired connection to a wired controller. The wireless controller 10 is adapted as a terminal device to communicate with the game device 100 via the wireless adapter 120. The game device 100 creates game AV (Audio Visual) data based on user's game manipulation instructions which are transmitted from the wireless controller 10. The output device 30 includes the display 32 and the speaker 34, such that the output device 30 receives game AV data from the game device 100 via the network 40, displays a game image on the display 32, and outputs game sound through the speaker 34.

The game device 100 and the output device 30 may be wired or connected wirelessly to each other. For example, the network 40 for connecting between the game device 100 and the output device 30 may take the form of a home network constructed by means of a network (LAN) cable or a wireless LAN. When the game device 100 and the output device 30 are connected wirelessly to each other, the game device 100 and the output device 30 can be more freely located as compared to a case where they are wired to each other by a cable or the like. This allows the user not to be restricted to a particular location to play games.

The Bluetooth technology may also be used to set up a wireless connection between the wireless controller 10 and the wireless adapter 120. The wireless adapter 120 enables a wireless connection with a plurality of wireless controllers 10. That is, in the game system 1, it is possible to realize point-to-multi-point connections between the game device 100 and the wireless controllers 10. The wireless adapter 120 according to the second embodiment includes a communication module responsible for communications with the wireless controller 10, and a control unit which controls transmissions of information between the game device 100 and the wireless controller 10. In the game system 1, the communication module provided in the wireless adapter 120 functions as a parent device or a master, while the wireless controller 10 serves as a slave.

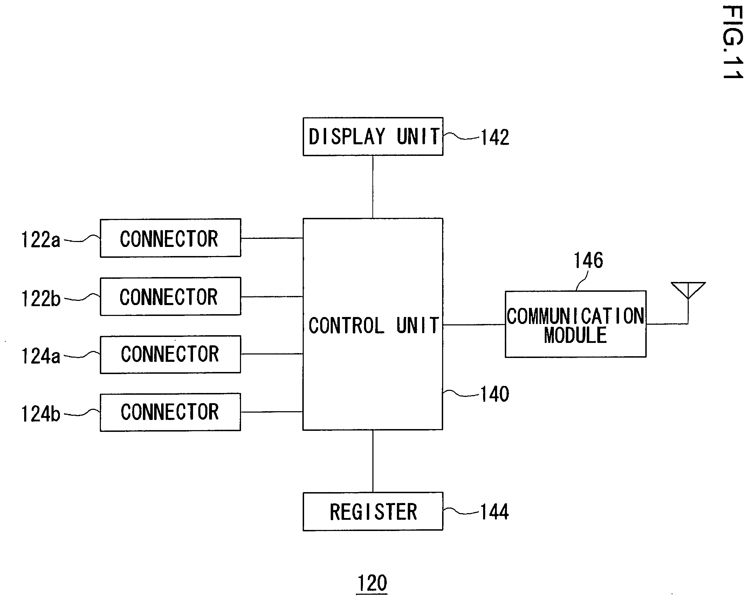

Fig. 11 shows the configuration for realizing the communication capability of the wireless adapter 120. The wireless adapter 120 includes a communication module 146 which can connect to a plurality of wireless controllers 10, the connectors 122a, 122b, 124a, and 124b for electrically connecting to the game device 100, and a control unit 140 which provides control to information transmissions between the communication module 146 and the game device 100 and information transmissions between the communication module 146 and the wireless controller 10. In Fig. 11, only one communication module 146 is shown; however, it is also acceptable to provide a plurality of communication modules 146. When wireless communications are realized using the Bluetooth technology, up to seven slaves can be connected at the same time to a piconet which is created by the communication module 146 serving as a master. For this reason, to enable up to eight users to play a game, the wireless adapter 120 has preferably at least two communication modules 146. At this time, in the game system 1, such an environment is realized in which a plurality of masters in the wireless adapter 120 or the communication modules 146 and a plurality of slaves or the wireless controllers 10 are connected to each other.

The communication capability of the wireless adapter 120 according to the second embodiment is realized in the wireless adapter 120 by a CPU, a memory, or a program loaded in the memory. Shown here is the functional blocks that are realized by a combination thereof. The program may be incorporated into the wireless adapter 120, or externally supplied in the form of a program stored in a storage medium. It will be therefore understood by those skilled in the art that these functional blocks can be realized in any form only by hardware, only by software, or by a combination of hardware and software.

The communication module 146 may be of a type which is incorporated into the housing 126 of the wireless adapter 120, or alternatively, a type which is externally connected to the wireless adapter 120. In the latter case, the wireless adapter 120 has a mount portion for mounting the communication module 146. When the wireless adapter 120 has a plurality of communication modules 146, the wireless adapter 120 may incorporate all the communication modules 146 or some of the communication modules 146, or may be connected with all the communication modules 146 via the mount portion.

As shown in Fig. 9(b), the connectors 122a and 122b and the connectors 124a and 124b are formed integrally with the housing 126. Thus, when the wireless adapter 120 is attached to the game device 100, this arrangement allows all the slots 112 and 114 of the game device 100 to electrically connect to the connectors 122 and 124. The controller slots of them, i.e., the slots 112a and 112b are assigned a port as described above. In the second embodiment, the control unit 140 is expandable so as to provide a larger number of ports than the number of the slots 112 of the game device 100. In this case, the control unit 140 functions to allocate two or more ports to at least one slot 112, so that the wireless controllers 10 larger in number than the slots 112, i.e., by two or more are connected to the game device 100. This function is the same as that of the expansion adapter used for the conventional wired controller. However, the conventional port is determined by the position of the slot into which the connector of the wired controller is inserted. In contrast to this, when the wireless controller is used in the second embodiment, there is no concept of the location into which the connector is inserted, and thus the control unit 140 defines, as appropriate, the port for the wireless controller 10.

Like the conventional expansion adapter, when connected to a plurality of wireless controllers 10, the control unit 140 of the wireless adapter 120 stores data transmitted from the wireless controller 10 via the communication module 146 in a register 144 corresponding to the port. Then, the control unit 140 sequentially switches connections between the register 144 and the slot 112, thereby realizing communications between the wireless controller 10 and the game device 100. It is preferable that the number of registers 144 prepared correspond to the maximum defined number of ports. In the presence of a plurality of communication modules 146, the control unit 140 switches the connection between the wireless controller 10, for which each communication module 146 is responsible, and the game device 100. To transmit data from the game device 100 to the wireless controller 10, the AM_ADDR described in relation to Fig. 3 is inserted into the packet header.

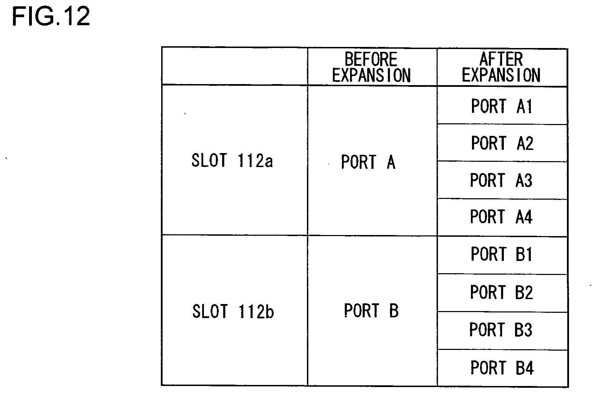

Fig. 12 is a table showing the relation between the slot and the port allocated thereto. When the control unit 140 provides no port expansion or is in the default state, the port A is allocated to the slot 112a, while the port B is allocated to the slot 112b. Without any port expansion, this arrangement allows for connections to two wireless controllers 10. On the other hand, with a port expansion by the control unit 140, it is possible to allocate up to four ports (A1 to A4) to the slot 112a, while allocating up to four ports (B1 to B4) to the slot 112b. The maximum number of ports allocated to each slot 112 can be set arbitrarily in the game system 1. For example, this setting is provided based on a request from a game program executed in the game device 100. In a game program which enables eight users to play a game at the same time, four ports are typically allocated to each slot 112.

In the case of Bluetooth, the AM_ADDR is used to correlate the port and the wireless controller 10. When other communication protocol is utilized, information for correlating the port and the wireless controller 10 only needs to be such as to uniquely identify the wireless controller 10 in a communication environment, and may utilize a device ID such as a MAC address. In the case of an IP communication, it may be possible to use an IP address.

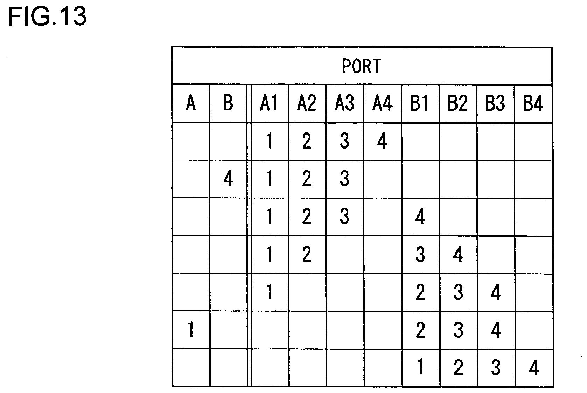

Fig. 13 is a table showing an example port setting of each slot 112 for four wireless controllers 10. The numerical values 1 to 4 shown in Fig. 13 shall indicate the address of each of the wireless controllers 10. For each wireless controller 10, the control unit 140 selects one of the ports allocated to the two slots 112, and then sets the resulting port to the address of the wireless controller 10. The port is selected in accordance with a request from the game program as described above. For example, when the game program requests only the port allocated to the slot 112a, the four wireless controllers 10 only need to be allocated to the port A1 to A4. On the other hand, when the game program requires the controllers to be divided into two groups so as to be allocated respectively to the slot 112a and the slot 112b, two wireless controllers 10 are allocated to the ports A1 and A2, respectively, while the other two wireless controllers 10 are allocated to the ports B1 and B2, respectively. For example, when four players are divided into two teams, the ports corresponding to the number of members of each team may be allocated to the slot 112a and the slot 112b. The control unit 140 sets ports appropriately to the wireless controllers 10, thereby making it possible to realize a preferable wireless communication environment.

In the presence of a plurality of communication modules 146 serving as a master, for example, as shown in the first embodiment, each communication module 146 establishes a connection with one or more wireless controllers 10. Even in this case, a request from the game program may be employed to determine with which port the wireless controller 10 is correlated. For example, suppose that in the presence of two communication modules 146 and four wireless controllers 10, each communication module 146 connects to two wireless controllers 10. In this case, one communication module 146 may associate respectively two wireless controllers 10 to the ports A1 and B1, while the other communication module 146 may associate respectively the other two wireless controllers 10 to the ports A2 and B2.

The wireless adapter 120 may have a display unit 142, on which the control unit 140 displays the port defined in response to a port confirm request from the wireless controller 10. At the start of a game, the ordinal position of the user as a player is determined based on the port number. The user selects a character based on the player number identified by the port number. During the game, the game device reflects a game manipulation input on the wireless controller 10 on the movement of the character based on the port number of the wireless controller 10. When the connection is disconnected during the game due to a link failure or the like, the user needs to recover the character that the user has used until then. Accordingly, it is preferable that the user recognize the port number during the game so as to make it possible to recover the character by designating the port.

After the wireless controller 10 has established a connection with the communication module 146, the wireless controller 10 can confirm its own port number. To this end, the user provides a predetermined input manipulation, thereby sending a port confirm request to the wireless adapter 120. Upon reception of the port confirm request, the control unit 140 displays the defined port number on the display unit 142, allowing the user to view the port number displayed and thereby know the port number of his/her own wireless controller 10. Alternatively, the display unit may also be provided in each wireless controller 10. In this case, the control unit 140 transmits the port number to the wireless controller 10 via the communication module 146, allowing the user to view the display unit of his/her own wireless controller 10 to know the port number. This allows the user to know the port number of his/her own wireless controller 10, thereby making it possible to realize a subsequent smooth game manipulation.

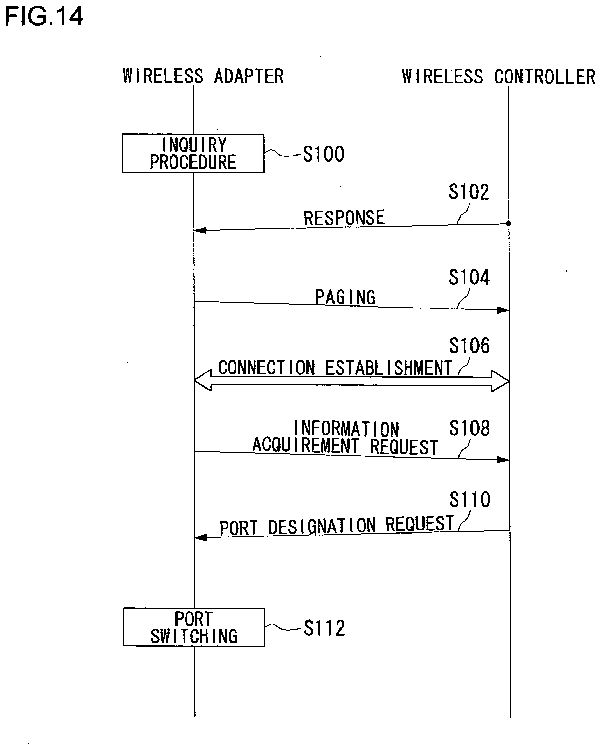

Fig. 14 shows an example sequence of a method for establishing a connection using a port designation request. Here, Bluetooth communications are assumed. According to the Bluetooth specification, no port can be set until a connection is established. Thus, this sequence shows such a method in which the user positively designates a connection port after a connection has been established. First, the wireless adapter 120 performs an inquiry procedure (S10), and the peripheral wireless controllers 10 each return their response to the inquiry (S102). The response is sent back using the FHS packet in accordance with the Bluetooth specification. When other communication protocol used allows for containing the port designation request in the response to the inquiry, the response itself may preferably contain the port designation request in order to reduce the time required for making a connection. More preferably, the FHS packet may also contain the port designation request when Bluetooth allows, in the future, any user information to be included in the FHS packet.

Upon reception of a response, the wireless adapter 120 pages the wireless controller 10 (S104) and selects a port arbitrarily to establish a wireless connection with the wireless controller 10 (S106). Subsequently, the wireless adapter 120 sends an information acquirement request to the wireless controller 10 (S108). Upon reception of this request, the wireless controller 10 returns a port designation request to the wireless adapter 120 (S110). If the port designated by the port designation request is the same as the port that has been already set in S106, then the wireless adapter 120 maintains the connection. On the other hand, if the designated port is different from the port that has been already set, then the wireless adapter 120 switches between the ports (S112) to connect the wireless controller 10 to the designated port. The foregoing procedure allows the user to designate the port number of his/her own wireless controller 10, thereby realizing subsequent smooth game manipulations such as the selection of a character.

As described above, if the port designation request can be sent in S102, the process will page the wireless controller 10 in S104 after the port is set. At this time, the wireless controller 10 is paged using the defined port and a packet containing the device ID. When no port is designated, the user may select the wireless controller 10, to which the desired port is set, from among the wireless controllers 10 for which the wireless adapter 120 has selected their ports in S106. The wireless adapter 120 selects a port in accordance with a request from a game program. Since a game program uses predefined ports, the wireless adapter 120 associates vacant ports with the wireless controllers 10 sequentially in the ascending order of the port numbers.

The aforementioned sequence enables a user to participate in a game in progress. A new user may designate a port to join the game, or alternatively may be automatically assigned a port to join the game. When the designated port is already in use, the wireless adapter 120 preferably urges the new user to designate another port or may automatically associate the user with a vacant port. When the connection is disconnected during a game due to a link failure or the like, the wireless adapter 120 preferably sets the same port as used until then to the wireless controller 10. For example, the wireless adapter 120 may monitor a connection request within a predetermined period of time after the disconnection. If any response is monitored within this period of time, the wireless adapter 120 may re-set the same port to the wireless controller 10 that was disconnected, based on the Bluetooth address which has been stored. This makes it possible for the user to utilize the original player number to rejoin the game.

The wireless adapter 120 has a register 144 for each defined port. The control unit 140 stores data transmitted via the communication module 146 in the register 144 corresponding to the port. The CPU of the game device 100 transmits a data transfer command to the control unit 140 through the connector 122 or the connector 124 in predetermined communication cycles. This transfer command is sequentially sent to each register 144 based on the port number, and the control unit 140 transfers the data from each wireless controller 10 stored in the register 144 to the CPU of the game device 100. In this manner, the port number can be used to relay signal transmissions between a plurality of wireless controllers 10 and the game device 100.

In the foregoing, the present invention was described in accordance with the second embodiment. The second embodiment was illustrated only by way of example. It is thus to be understood by those skilled in the art that various modifications may be made to each of these components and each combination of these processes, and these modifications also fall in the scope of the present invention.

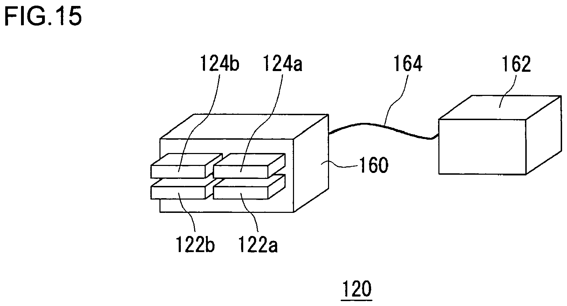

Fig. 15 shows a modified example of the configuration of the wireless adapter 120. The wireless adapter 120 is configured such that a connector housing 160 and a communication unit 162 are connected to each other by a cable 164, and the connector housing 160 is provided with a plurality of connectors 122 and 124. The communication unit 162 corresponds to the communication module 146 of Fig. 11, and in this example, the communication unit 162 is formed separately from the connectors 122 and 124. Even in this case, the connector housing 160 may be preferably provided with the connectors 122 and 124 corresponding to the location of the slots 112 and 114 of the game device 100. This configuration allows for readily blocking all the slots 112 at a time with the connector 122, thereby preventing wired and wireless controllers from being present at the same time.

The aforementioned wireless adapter 120 is configured such that a plurality of connectors 122 and 124 are integrated with a housing; however, these connectors may also be formed separately. Even in this case, the connectors 122a and 122b can be formed to be inseparable from each other, thereby preventing the user from accidentally not inserting the connector 122 into the slot 112.

In the second embodiment, the description was given to the wireless adapter 120 of the game device 100. However, an electronic device of interest is not limited to the game device 100, but may also be a personal computer or a household electric appliance, for example. The personal computer may have a keyboard terminal or a mouse terminal for a wired connection. A wireless adapter that blocks these terminals at the same time is naturally included in the scope of the present invention.

The aforementioned first and second embodiments may be combined to implement the present invention. For example, the inventive port setting in the second embodiment may be applied to the communication technique according to the first embodiment. The inventive port setting in the second embodiment can be applied not only to wireless communications but also to wired communications such as using the Ethernet (trademark). In this case, the master only has to serve to allocate IP addresses to slaves, and other control may be provided as described in the embodiment.

## Claims

1. A game device (1) comprising:
a plurality of communication modules (24) each capable of wirelessly connecting to a plurality of wireless controllers (10); and
a control unit (22) which controls a transmission of information relating to one or more wireless controllers (10) between the plurality of communication modules (24) for establishing a connection between the plurality of communication modules (24) and the plurality of wireless controllers (10), wherein
a first communication module (24a) of the plurality of communication modules (24) is adapted to perform an inquiry procedure for establishing a connection with at least one of the wireless controllers (10);
communication modules (24) of the plurality of communication modules (24) different from the first communication module (24a) are adapted to perform no inquiry procedure for establishing a connection with the wireless controllers (10), while the first communication module (24a) is performing the inquiry procedure;
the first communication module (24a) is adapted to transfer information relating to the at least one wireless controller (10) to the control unit (22) and the control unit (22) transfers, to a second communication module (24b) out of the communication modules (24) different from the first communication modules (24a), information relating to one or more wireless controllers (10) with which the first communication module (24a) establishes no connection; and
the second communication module (24b) is adapted to establish a connection with a wireless controller (10) with which the first communication module (24a) establishes no connection based on the information relating to the at least one wireless controller transferred from the control unit (22).

2. A game device according to claim 1, where
one of the communication modules is an internal communication module (24a) incorporated into a housing (126) of a wireless adapter (120) capable of wirelessly connecting to a plurality of wireless controllers (10);
the game device (1) comprising a mount portion (23) in which an external communication module (24b) capable of wirelessly connecting to a plurality of wireless controllers (10) is mounted and externally connected to the wireless adapter (120).

3. The game device according to any one of claims 1 or 2, wherein
the control unit (22) instructs the first communication module (24a) to perform the inquiry procedure.

4. The game device according to any one of claims 1 to 3, wherein:
the first communication module (24a) transfers information relating to the wireless controller (10) and containing communication module designation information to the control unit (22); and
the control unit (22) refers to the communication module designation information to transfer, to the second communication module (24b), information relating to a wireless controller (10) that designates the second communication module (24b) as a connecting party.

5. The game device according to any one of claims 1 to 4, wherein
the control unit (22) defines a limited maximum number of wireless controllers (10) to which each communication module connects.

6. The game device according to claim 5, wherein
the control unit (22) divides the plurality of wireless controllers (10) between each communication module (24) so that each communication module (24) connects to a substantially equal number of wireless controllers (10) that is within the maximum number.

7. The game device according to any one of claims 1 to 6 wherein
the control unit (22) divides the plurality of wireless controllers (10) between each communication module (24) in accordance with a latency level defined for each wireless controller.

8. The game device according to any one of claims 1 to 4, wherein
the control unit (22) assigns the plurality of wireless controllers (10) having a common purpose of use or function to one communication module (24).

9. A game system comprising:
a plurality of game device wireless controllers (10);
a plurality of communication modules (24) each capable of wirelessly connecting to a plurality of wireless controllers (10); and
a control unit (22) which controls a transmission of information relating to one or more game device wireless controllers (10) between the plurality of communication modules for establishing a connection between the plurality of game device wireless controllers (10) and the plurality of communication modules (24), wherein:
a first communication module (24a) of the plurality of communication modules are adapted to perform an inquiry procedure for establishing a connection with at least one of the game device wireless controllers (10);
communication modules (24) of the plurality of communication modules different from the first communication module (24a) are adapted to perform no inquiry procedure for establishing a connection with the game device wireless controllers (10), while the first communication module (24a) is performing the inquiry procedure;
the first communication module (24a) is configured to transfer information relating to the at least one game device wireless controller (10) to the control unit (22) and the control unit (22) is configured to transfer, to a second communication module (24b) out of the communication modules (24) different from the first communication module (24a), information relating to one or more game device wireless controllers (10) with which the first communication module (24a) establishes no connection; and
the second communication module (24b) establishes a connection with a game device wireless controller (10) based on the information relating to the at least one game device wireless controller (10) transferred from the control unit (22).

10. A method for establishing a connection between a plurality of wireless controllers (10) and a game device (1) having a first communication module (24a) and a second communication module (24b), the method comprising:
allowing the first communication module (24a) to perform an inquiry procedure (S10) for establishing a connection with at least one of the wireless controllers (10);
not allowing communication modules (24) of the plurality of communication modules different from the first communication module (24a) to perform the inquiry procedure for establishing a connection with the wireless controllers (10), while the first communication module (24a) is performing the inquiry procedure;
allowing the first communication module (24a) to acquire information relating to the plurality of wireless controllers (10) which return a response to the inquiry (S12);
transferring (S36), to a second communication module (24b) out of the communication modules (24) different from the first communication module (24a), information relating to one or more wireless controllers (10) with which the first communication module (24a) establishes no connection;
allowing the first communication module (24a) to page (S20) a wireless controller (10); and
allowing the second communication module (24b) to page (S24) a wireless controller (10) that is not paged by the first communication module (24a).

11. A program for establishing a connection with a plurality of wireless controllers (10) by making a computer to execute the method of claim 10.

12. A computer readable recording medium storing the program of claim 11.

## Patentansprüche

1. Spielvorrichtung (1), umfassend:
eine Vielzahl von Kommunikationsmodulen (24), die jeweils drahtlos mit einer Vielzahl von drahtlosen Steuereinheiten (10) verbunden werden können; und
eine Steuerungseinheit (22), die eine Übertragung von Informationen in Bezug auf eine oder mehrere drahtlose Steuereinheiten (10) zwischen der Vielzahl von Kommunikationsmodulen (24) zur Herstellung einer Verbindung zwischen der Vielzahl von Kommunikationsmodulen (24) und der Vielzahl von drahtlosen Steuereinheiten (10) steuert; wobei
ein erstes Kommunikationsmodul (24a) der Vielzahl von Kommunikationsmodulen (24) geeignet ist, eine Anfrageprozedur zur Herstellung einer Verbindung mit mindestens einer der drahtlosen Steuereinheiten (10) vorzunehmen;
Kommunikationsmodule (24) der Vielzahl von Kommunikationsmodulen (24), die von dem ersten Kommunikationsmodul (24a) verschieden sind, geeignet sind, keine Anfrageprozedur zur Herstellung einer Verbindung mit den drahtlosen Steuereinheiten (10) vorzunehmen, während das erste Kommunikationsmodul (24a) die Anfrageprozedur vornimmt;
das erste Kommunikationsmodul (24a) geeignet ist, Informationen in Bezug auf die mindestens eine drahtlose Steuereinheit (10) zur Steuerungseinheit (22) zu transferieren, und die Steuerungseinheit (22), zu einem zweiten Kommunikationsmodul (24b) unter den Kommunikationsmodulen (24), das von dem ersten Kommunikationsmodul (24a) verschieden ist, Informationen in Bezug auf eine oder mehrere drahtlose Steuereinheiten (10) transferiert, mit denen das erste Kommunikationsmodul (24a) keine Verbindung herstellt; und
das zweite Kommunikationsmodul (24b) geeignet ist, eine Verbindung mit einer drahtlosen Steuereinheit (10) herzustellen, mit der das erste Kommunikationsmodul (24a) keine Verbindung herstellt, auf der Basis der Informationen in Bezug auf die mindestens eine drahtlose Steuereinheit, die von der Steuerungseinheit (22) transferiert werden.

2. Spielvorrichtung nach Anspruch 1, wobei
eines der Kommunikationsmodule ein internes Kommunikationsmodul (24a) ist, das in einem Gehäuse (126) eines drahtlosen Adapters (120) enthalten ist, der drahtlos mit einer Vielzahl von drahtlosen Steuereinheiten (10) verbunden werden kann;
die Spielvorrichtung (1) einen Montageabschnitt (23) umfasst, in dem ein externes Kommunikationsmodul (24b), das drahtlos mit einer Vielzahl von drahtlosen Steuereinheiten (10) verbunden werden kann, montiert ist und extern mit dem drahtlosen Adapter (120) verbunden ist.

3. Spielvorrichtung nach einem der Ansprüche 1 oder 2, wobei
die Steuerungseinheit (22) das erste Kommunikationsmodul (24a) anweist, die Anfrageprozedur vorzunehmen.

4. Spielvorrichtung nach einem der Ansprüche 1 bis 3, wobei
das erste Kommunikationsmodul (24a) Informationen in Bezug auf die drahtlose Steuereinheit (10) und enthaltend Kommunikationsmodulbezeichnungsinformationen zur Steuerungseinheit (22) transferiert; und
die Steuerungseinheit (22) auf die Kommunikationsmodulbezeichnungsinformationen Bezug nimmt, um, zu dem zweiten Kommunikationsmodul (24b), Informationen in Bezug auf eine drahtlose Steuereinheit (10) zu transferieren, die das zweite Kommunikationsmodul (24b) als Verbindungspartei bezeichnen.

5. Spielvorrichtung nach einem der Ansprüche 1 bis 4, wobei
die Steuerungseinheit (22) eine begrenzte maximale Anzahl von drahtlosen Steuereinheiten (10) definiert, mit denen jedes Kommunikationsmodul verbunden wird.

6. Spielvorrichtung nach Anspruch 5, wobei
die Steuerungseinheit (22) die Vielzahl von drahtlosen Steuereinheiten (10) zwischen jedem Kommunikationsmodul (24) derart teilt, dass jedes Kommunikationsmodul (24) mit einer im Wesentlichen gleichen Anzahl drahtloser Steuereinheiten (10) verbunden wird, die innerhalb der maximalen Anzahl liegt.

7. Spielvorrichtung nach einem der Ansprüche 1 bis 6, wobei
die Steuerungseinheit (22) die Vielzahl von drahtlosen Steuereinheiten (10) zwischen jedem Kommunikationsmodul (24) gemäß einem Latenz-Level teilt, der für jede drahtlose Steuereinheit definiert ist.

8. Spielvorrichtung nach einem der Ansprüche 1 bis 4, wobei
die Steuerungseinheit (22) die Vielzahl von drahtlosen Steuereinheiten (10) mit einem gemeinsamen Verwendungs- oder Funktionszweck einem Kommunikationsmodul (24) zuweist.

9. Spielsystem, umfassend:
eine Vielzahl von drahtlosen Spielvorrichtungssteuereinheiten (10);
eine Vielzahl von Kommunikationsmodulen (24), die jeweils drahtlos mit einer Vielzahl von drahtlosen Steuereinheiten (10) verbunden werden können; und
eine Steuerungseinheit (22), die eine Übertragung von Informationen in Bezug auf eine oder mehrere drahtlose Spielvorrichtungssteuereinheiten (10) zwischen der Vielzahl von Kommunikationsmodulen zur Herstellung einer Verbindung zwischen der Vielzahl von drahtlosen Spielvorrichtungssteuereinheiten (10) und der Vielzahl von Kommunikationsmodulen (24) steuert; wobei
ein erstes Kommunikationsmodul (24a) der Vielzahl von Kommunikationsmodulen geeignet ist, eine Anfrageprozedur zur Herstellung einer Verbindung mit mindestens einer der drahtlosen Spielvorrichtungssteuereinheiten (10) vorzunehmen;
Kommunikationsmodule (24) der Vielzahl von Kommunikationsmodulen, die von dem ersten Kommunikationsmodul (24a) verschieden sind, geeignet sind, keine Anfrageprozedur zur Herstellung einer Verbindung mit den drahtlosen Spielvorrichtungssteuereinheiten (10) vorzunehmen, während das erste Kommunikationsmodul (24a) die Anfrageprozedur vornimmt;
das erste Kommunikationsmodul (24a) ausgelegt ist, Informationen in Bezug auf die mindestens eine drahtlose Spielvorrichtungssteuereinheit (10) zur Steuerungseinheit (22) zu transferieren, und die Steuerungseinheit (22) ausgelegt ist, zu einem zweiten Kommunikationsmodul (24b) unter den Kommunikationsmodulen (24), das von dem ersten Kommunikationsmodul (24a) verschieden ist, Informationen in Bezug auf eine oder mehrere drahtlose Spielvorrichtungssteuereinheiten (10) zu transferieren, mit denen das erste Kommunikationsmodul (24a) keine Verbindung herstellt; und
das zweite Kommunikationsmodul (24b) eine Verbindung mit einer drahtlosen Spielvorrichtungssteuereinheit (10) herstellt, auf der Basis der Informationen in Bezug auf die mindestens eine drahtlose Spielvorrichtungssteuereinheit (10), die von der Steuerungseinheit (22) transferiert werden.

10. Verfahren zur Herstellung einer Verbindung zwischen einer Vielzahl von drahtlosen Steuereinheiten (10) und einer Spielvorrichtung (1), die ein erstes Kommunikationsmodul (24a) und ein zweites Kommunikationsmodul (24b) aufweist, wobei das Verfahren umfasst:
dem ersten Kommunikationsmodul (24a) zu gestatten, eine Anfrageprozedur (S10) zur Herstellung einer Verbindung mit mindestens einer der drahtlosen Steuereinheiten (10) vorzunehmen;
Kommunikationsmodulen (24) der Vielzahl von Kommunikationsmodulen, die von dem ersten Kommunikationsmodul (24a) verschieden sind, nicht zu gestatten, die Anfrageprozedur zur Herstellung einer Verbindung mit den drahtlosen Steuereinheiten (10) vorzunehmen, während das erste Kommunikationsmodul (24a) die Anfrageprozedur vornimmt;
dem ersten Kommunikationsmodul (24a) zu gestatten, Informationen in Bezug auf die Vielzahl von drahtlosen Steuereinheiten (10) zu erfassen, die eine Antwort auf die Anfrage (S12) zurückführen;
zu einem zweiten Kommunikationsmodul (24b) unter den Kommunikationsmodulen (24), die von dem ersten Kommunikationsmodul (24a) verschieden sind, Informationen in Bezug auf eine oder mehrere drahtlose Steuereinheiten (10) zu transferieren (S36), mit denen das erste Kommunikationsmodul (24a) keine Verbindung herstellt;
dem ersten Kommunikationsmodul (24a) zu gestatten, eine drahtlose Steuereinheit (10) zu pagen (S20); und
dem zweiten Kommunikationsmodul (24b) zu gestatten, eine drahtlose Steuereinheit (10) zu pagen (S24), die nicht von dem ersten Kommunikationsmodul (24a) gepaged wird.

11. Programm zur Herstellung einer Verbindung mit einer Vielzahl von drahtlosen Steuereinheiten (10), indem bewirkt wird, dass ein Computer das Verfahren von Anspruch 10 ausführt.

12. Computerlesbares Aufzeichnungsmedium, welches das Programm von Anspruch 11 speichert.

## Revendications

1. Dispositif de jeu (1) comprenant :
une pluralité de modules de communication (24), chacun étant capable de se connecter sans fil à une pluralité de dispositifs de commande sans fil (10) ; et
une unité de commande (22) qui commande une transmission d'informations se rapportant à un ou plusieurs dispositifs de commande sans fil (10) entre la pluralité de modules de communication (24) pour établir une connexion entre la pluralité de modules de communication (24) et la pluralité de dispositifs de commande sans fil (10), dans lequel
un premier module de communication (24a) de la pluralité de modules de communication (24) est conçu pour effectuer une procédure d'interrogation pour établir une connexion avec au moins l'un des dispositifs de commande sans fil (10) ;
des modules de communication (24) de la pluralité de modules de communication (24) différents du premier module de communication (24a) sont conçus pour n'effectuer aucune procédure d'interrogation pour établir une connexion avec les dispositifs de commande sans fil (10) pendant que le premier module de communication (24a) effectue la procédure d'interrogation ;
le premier module de communication (24a) est conçu pour transférer des informations se rapportant au ou aux dispositifs de commande sans fil (10) à l'unité de commande (22) et l'unité de commande (22) transfère, à un seconde module de communication (24b) parmi les modules de communication (24) différents du premier module de communication (24a), des informations se rapportant à un ou plusieurs dispositifs de commande sans fil (10) avec lesquels le premier module de communication (24a) n'établit aucune connexion ; et
le second module de communication (24b) est conçu pour établir une connexion avec un dispositif de commande sans fil (10) avec lequel le premier module de communication (24a) n'établit aucune connexion en se basant sur les informations se rapportant au ou aux dispositifs de commande sans fil transférées depuis l'unité de commande (22).

2. Dispositif de jeu selon la revendication 1, où
l'un des modules de communication est un module de communication interne (24a) incorporé dans un boîtier (126) d'un adaptateur sans fil (120) capable de se connecter sans fil à une pluralité de dispositifs de commande sans fil (10) ;
le dispositif de jeu (1) comprenant une partie de montage (23) dans laquelle un module de communication externe (24b) capable de se connecter sans fil à une pluralité de dispositifs de commande sans fil (10), est monté et connecté de manière externe à l'adaptateur sans fil (120).

3. Dispositif de jeu selon l'une quelconque des revendications 1 ou 2, dans lequel
l'unité de commande (22) donne comme instruction au premier module de communication (24a) d'effectuer la procédure d'interrogation.

4. Dispositif de jeu selon l'une quelconque des revendications 1 à 3, dans lequel :
le premier module de communication (24a) transfère des informations se rapportant au dispositif de commande sans fil (10) et comportant des informations de désignation de module de communication à l'unité de commande (22) ; et
l'unité de commande (22) se réfère aux informations de désignation de module de communication pour transférer, au second module de communication (24b), des informations se rapportant à un dispositif de commande sans fil (10) qui désigne le second module de communication (24b) comme partie qui se connecte.

5. Dispositif de jeu selon l'une quelconque des revendications 1 à 4, dans lequel
l'unité de commande (22) définit un nombre maximal limité de dispositifs de commande sans fil (10) auxquels chaque module de communication se connecte.

6. Dispositif de jeu selon la revendication 5, dans lequel
l'unité de commande (22) divise la pluralité de dispositifs de commande sans fil (10) entre chaque module de communication (24) de telle sorte que chaque module de communication (24) se connecte à un nombre sensiblement égal de dispositifs de commande sans fil (10) qui se trouve dans le nombre maximal.

7. Dispositif de jeu selon l'une quelconque des revendications 1 à 6, dans lequel
l'unité de commande (22) divise la pluralité de dispositifs de commande sans fil (10) entre chaque module de communication (24) en fonction d'un niveau de latence défini pour chaque dispositif de commande sans fil.

8. Dispositif de jeu selon l'une quelconque des revendications 1 à 4, dans lequel
l'unité de commande (22) attribue la pluralité de dispositifs de commande sans fil (10) ayant un objectif commun d'utilisation ou de fonction à un module de communication (24).

9. Système de jeu comprenant :
une pluralité de dispositifs de commande sans fil de dispositif de jeu (10) ;
une pluralité de modules de communication (24), chacun étant capable de se connecter sans fil à une pluralité de dispositifs de commande sans fil (10) ; et
une unité de commande (22) qui commande une transmission d'informations se rapportant à un ou plusieurs dispositifs de commande sans fil de dispositif de jeu (10) entre la pluralité de modules de communication pour établir une connexion entre la pluralité de dispositifs de commande sans fil de dispositif de jeu (10) et la pluralité de modules de communication (24), dans lequel :
un premier module de communication (24a) de la pluralité de modules de communication est conçu pour effectuer une procédure d'interrogation pour établir une connexion avec au moins l'un des dispositifs de commande sans fil de dispositif de jeu (10) ;
des modules de communication (24) de la pluralité de modules de communication différents du premier module de communication (24a) sont conçus pour n'effectuer aucune procédure d'interrogation pour établir une connexion avec les dispositifs de commande sans fil de dispositif de jeu (10) pendant que le premier module de communication (24a) effectue la procédure d'interrogation ;
le premier module de communication (24a) est configuré pour transférer des informations se rapportant au ou aux dispositifs de commande sans fil de dispositif de jeu (10) à l'unité de commande (22) et l'unité de commande (22) est configurée pour transférer, à un second module de communication (24b) parmi les modules de communication (24) différents du premier module de communication (24a), des informations se rapportant à un ou plusieurs dispositifs de commande sans fil de dispositif de jeu (10) avec lesquels le premier module de communication (24a) n'établit aucune connexion ; et
le second module de communication (24b) établit une connexion avec un dispositif de commande sans fil de dispositif de jeu (10) en se basant sur les informations se rapportant au ou aux dispositifs de commande sans fil de dispositif de jeu (10) transférées depuis l'unité de commande (22).

10. Procédé pour établir une connexion entre une pluralité de dispositifs de commande sans fil (10) et un dispositif de jeu (1) ayant un premier module de communication (24a) et un second module de communication (24b), le procédé consistant :
à permettre au premier module de communication (24a) d'effectuer une procédure d'interrogation (S10) pour établir une connexion avec au moins l'un des dispositifs de commande sans fil (10) ;
à ne pas permettre à des modules de communication (24) de la pluralité de modules de communication différents du premier module de communication (24a) d'effectuer la procédure d'interrogation pour établir une connexion avec les dispositifs de commande sans fil (10) pendant que le premier module de communication (24a) effectue la procédure d'interrogation ;
à permettre au premier module de communication (24a) d'acquérir des informations se rapportant à la pluralité de dispositifs de commande sans fil (10) qui renvoient une réponse à l'interrogation (S12) ;
à transférer (S36), à un second module de communication (24b) parmi les modules de communication (24) différents du premier module communication (24a), des informations se rapportant à un ou plusieurs dispositifs de commande sans fil (10) avec lesquels le premier module de communication (24a) n'établit aucune connexion ;
à permettre au premier module de communication (24a) d'appeler (S20) un dispositif de commande sans fil (10) ; et
à permettre au second module de communication (24b) d'appeler (S24) un dispositif de commande sans fil (10) qui n'est pas appelé par le premier module de communication (24a).

11. Programme pour établir une connexion avec une pluralité de dispositifs de commande sans fil (10) en amenant un ordinateur à exécuter le procédé selon la revendication 10.

12. Support d'enregistrement lisible par ordinateur stockant le programme selon la revendication 11.
